# EUROPÄISCHE PATENTSCHRIFT

(11) **EP 1 637 364 B1**
(45) Veröffentlichungstag und Bekanntmachung des Hinweises auf die Patenterteilung: **27.06.2007**
(21) Anmeldenummer: 05020401.5
(22) Anmeldetag: 19.09.2005
(51) Int. Cl.: B60D 1/54, B60D 1/06

(54) **Anhängerkupplung**
Trailer coupling
Attelage de remorque

(30) Priorität: 20.09.2004 DE 102004045869
(43) Veröffentlichungstag der Anmeldung: 22.03.2006
(73) Patentinhaber: Jaeger Cartronix GmbH, 61145 Friedberg (DE)
(72) Erfinder: Hachadorian, Gary, 63934 Röllbach (DE); Zwettler, Peter, 61169 Friedberg (DE)
(74) Vertreter: KEIL & SCHAAFHAUSEN Patentanwälte

(56) Entgegenhaltungen:
- EP-A- 1 084 871
- EP-A- 1 400 379
- DE-A1- 10 243 044

## Beschreibung

Die Erfindung betrifft eine Anhängerkupplung für Fahrzeuge, insbesondere Kraftfahrzeuge wie Personenkraftwagen, mit einer Kugelstange, welche an ihrem freien Ende eine Kupplungskugel trägt und an ihrem anderen Ende mit einem Schwenkantrieb zum Verschwenken der Kugelstange zwischen einer Betriebsstellung und einer Ruhestellung fest verbunden ist, wobei der Schwenkantrieb eine Kurvensteuerung mit einem Leitkurvenkörper und einem Schwenkkurvenkörper aufweist, deren Kurvenflächen derart zusammenwirken, dass die Kugelstange mit ihrem freien Ende auf einer vorgegebenen Kurve zwischen ihrer Betriebsstellung und ihrer Ruhestellung verschwenkbar ist.

Bei Anhängerkupplungen insbesondere für Personenkraftwagen wird zunehmend Wert darauf gelegt, dass sie sich nur dann in ihrer Betriebsstellung hinter der Stoßstange des Personenkraftwagens befinden, wenn tatsächlich ein Anhänger gezogen wird. Sowohl aus ästhetischen Gründen als auch zur Vermeidung von Beschädigungen an oder durch die Anhängerkupplung soll die Anhängerkupplung im normalen Fahrbetrieb des Personenkraftwagen ohne Anhänger weder nach außen vorstehen noch sichtbar sein. Dazu wurden abnehmbare Anhängerkupplungen entwickelt, die im Bedarfsfall an einer fest an dem Personenkraftwagen montierten Halterung angebracht werden können. Aufgrund des vergleichsweise hohen Gewichts der Anhängerkupplung und dem unübersichtlichen Montageort unten an dem Personenkraftwagen ist das Anbringen der Anhängerkupplung jedoch vergleichsweise aufwendig. Zudem sind gebrauchte Anhängerkupplungen nach dem Gebrauch häufig verschmutzt, was sowohl beim Abmontieren als auch beim Lagern der abgenommenen Anhängerkupplung nachteilig ist.

Aus der EP 0 828 622 B1 ist eine Anhängerkupplung für Kraftfahrzeuge mit einem Kugelhals bekannt, der an einem fahrzeugfesten Schwenklager um eine Schwenkachse drehbar gelagert ist, um den Kugelhals von einer Arbeitsstellung in eine Ruhestellung und umgekehrt zu bewegen. Damit der Kugelhals in der Ruhestellung im Wesentlichen von der Stoßstange des Fahrzeugs verdeckt ist, ist eine Schwenkachse vorgesehen, welche an die Gegebenheiten des Fahrzeugs angepasst und in einem bestimmten Winkelbereich zu der Längs- und Querachse des Fahrzeugs angeordnet ist. Dadurch lässt sich eine Schwenkbewegung für den Kugelhals so vorgeben, dass der Kugelhals von der vorgegebenen Arbeitsstellung an der Stoßstange vorbei in eine Ruhestellung geschwenkt werden kann, in der der Kugelhals und die daran befestigte Kontakteinheit die Bodenfreiheit des Fahrzeugs so wenig wie möglich beeinträchtigen. Bei dieser Anhängerkupplung besteht jedoch der Nachteil, dass diese nur in einer ganz bestimmten Position an einem Fahrzeug angebracht werden kann, was bei bestimmten Fahrzeugtypen zu Problemen führt. Außerdem ist eine Handbetätigung schwierig, weil die Kugelstange selbst geführt werden müsste. Deshalb ist ein elektromotorischer Antrieb vorgesehen, der die Schwenkbewegung über ein Getriebe bewirkt.

Um eine flexiblere Montage zu erreichen, ist aus der DE 100 04 523 A1 eine Anhängerkupplung mit einem Kupplungsarm bekannt, der zwischen einer von dem Stoßfänger des Fahrzeugs verdeckten Nichtgebrauchsstellung und einer freiliegenden Gebrauchsstellung verstellbar ist, wobei zunächst eine Senkbewegung, anschließend eine Rotation und darauf folgend wieder eine Hubbewegung des Kupplungsarms durchgeführt wird. Für die Hub- und Senkbewegung sowie die Drehbewegung sind jeweils separate Antriebe notwendig, da die Bewegungsrichtungen orthogonal zueinander ausgerichtet sind. Dies verteuert die Anhängerkupplung und erhöht deren Gewicht.

Aus der gattungsgemäßen EP 1 400 379 A1 ist ferner eine Anhängerkupplung mit einer gekrümmten Kugelstange bekannt, welche mittels eines motorischen Antriebs und eines an dem anderen Ende der Kugelstange angreifenden Getriebes zwischen einer Betriebsstellung und einer Ruhestellung hin und her schwenkbar ist. Dabei verläuft die Kugelstange mit ihrem freien Ende mittels einer Kurvensteuerung auf einer durch diese vorgegebenen Kurve aus ihrer Betriebsstellung zunächst nach unten, dann seitlich unter dem Stoßfänger hindurch und schließlich hinter dem Stoßfänger wieder nach oben in die dortige Ruhestellung. Die jeweilige Richtung der Schwenkbewegung wird durch die zusammenwirkenden Kurvenflächen der Kurvensteuerung definiert, so dass die Schwenkbewegung unabhängig von Schwenkachsen frei konfigurierbar ist. Aufgrund der Ausgestaltung der Kurvenflächen ist jedoch ein vergleichsweise hoher Kraftaufwand für das Verfahren der Kugelstange erforderlich. Daher wird die Kurvensteuerung von einem elektrischen Motor über ein Getriebe mit hoher Übersetzung angetrieben, mit welchem eine ausreichende Kraft zur Bewegung der Kurvenflächen gegeneinander erreicht werden kann.

Aufgabe der Erfindung ist es daher, eine Anhängerkupplung zu schaffen, bei der die Schwenkbewegung einfach und frei vorgegeben werden kann und die eine Betätigung mit geringem Kraftaufwand ermöglicht.

Diese Aufgabe wird durch eine Anhängerkupplung mit dem Merkmalen des Anspruchs 1 im Wesentlichen dadurch gelöst, dass die Kurvenfläche des Schwenkkurvenkörpers einen von dem Schwenkkurvenkörper vorstehenden Dorn aufweist und der Schwenkkurvenkörper mit einer nach außen führenden Antriebswelle verbunden ist. Dadurch wird eine besonders gute Kraftübertragung zwischen dem mit der Antriebswelle verbundenen Schwenkkurvenkörper und dem Leitkurvenkörper erreicht, der vorzugsweise fest mit der Kugelstange verbunden oder einteilig mit dieser ausgebildet ist. Der Schwenkkurvenkörper übernimmt erfindungsgemäß die Aufgabe, den Leitkurvenkörper zu führen. Es ist erfindungsgemäß besonders vorteilhaft, dass in dem Schwenkkurvenkörper ein Vorsprung oder Dorn ausbildet ausgebildet ist, der die Kraft auf den Leitkurvenkörper überträgt. Dazu ist der mit der Kugelstange verbundene Leitkurvenkörper vorteilhafter Weise in einem Rahmen des Schwenkantriebs der Anhängerkupplung dreh- und kippbar gelagert, so dass der Leitkurvenkörper der durch den Vorsprung ausgeübten Kraft durch eine entsprechende Bewegung einfach folgen kann.

Vorzugsweise weist die Kurvenfläche des Leitkurvenkörpers dann zwei dem Dorn bzw. Vorsprung entsprechende, gegenläufige Schrägen auf, die ein Hoch- bzw. Runterklappen der Kugelstange bewirken, wenn der Dorn mit den Schrägen der Kurvenfläche des Leitkurvenkörpers zusammenwirkt. Um bei unterschiedlichen Drehrichtungen des Schwenkkurvenkörpers dieselbe Kurvenbahn zu beschreiben, können der Dorn und/oder der Leitkurvenkörper symmetrisch ausgebildet sein oder zumindest abschnittsweise symmetrische Kurvenflächen aufweisen.

Aufgrund der Leichtgängigkeit des Antriebs ist es sogar möglich, dass die von dem Schwenkantrieb nach außen führende Antriebswelle getriebelos mit dem Schwenkantrieb verbunden ist oder ein Getriebe mit einer nur geringen Übersetzung, bspw. bis zu einem Übersetzungsverhältnis 1 zu 5, vorgesehen ist. Eine übliche Getriebeübersetzung im Bereich von etwa 300 zu 1 ist zur Aufwendung der für die Verstellung der Kugelstange erforderlichen Kraft nicht nötig. Ein Getriebe mit einem kleinen Übersetzungsverhältnis dient dazu, den Verstellweg eines insbesondere manuellen Antriebs an die für die Versschwenkung notwendige Drehung der Antriebswelle anzupassen. In jedem Fall sind die Verstellzeit für die Anhängerkupplung und der Verstellweg für den Antrieb kurz, weil keine oder nur eine kleine Übersetzung notwendig ist.

Eine besonders vorteilhafte Ausgestaltung der Erfindung sieht vor, die Kugelstage mit dem Leitkurvenkörper um eine Kippachse kippbar in einem Kippgelenk zu lagern, welches drehbar in einem Rahmen des Schwenkantriebs aufgenommen ist. Dadurch kann eine leichtgängige Bewegung der Kugelstange bei gleichzeitig guter Kraftaufnahme der auf die Kugelstange einwirkenden Kräfte in dem Rahmen des Schwenkantriebs erreicht werden. Dabei ist es insbesondere vorteilhaft, wenn die Kippachse in einem gewissen Abstand zu der Kurvenfläche des Leitkurvenkörpers liegt, um bei der Krafteinwirkung einen Hebelarm auszunutzen.

Um auf einfache Weise eine Rotation der Kugelstange zu erreichen, kann erfindungsgemäß in dem Leitkurvenkörper ein Anschlag für den Dorn des Schwenkkurvenkörpers ausgebildet sein, der insbesondere als Mitnehmer dient, so dass der angetriebene Dorn den drehbar gelagerten Leitkurvenkörper und damit die Kugelstange mitdreht. Bei einer leichtgängigen Drehlagerung des Kippgelenks wird eine Verdrehung der Kugelstange auch durch ein Anstoßen des Dorns gegen die für die Verkippung der Kugelstange vorgesehene schräge Fläche des Leitkurvenkörpers erreicht, sofern die Verdrehung nicht durch einen Endwiderstand im Verfahrweg blockiert ist.

Besonders vorteilhaft ist es, wenn für jede Rotationsrichtung der Kugelstange jeweils ein Anschlag vorgesehen ist, um die Kugelstange hin und her drehen zu können. Dabei können die Anschläge unmittelbar benachbart angeordnet sein, um den Dorn an seiner Kurvenfläche während der Rotation der Kugelstange von jeder Seite einzuklemmen. Dadurch wird erreicht, dass die Kugelstange bei einer Umkehrung der Bewegungsrichtung der Antriebswelle während der Rotation unmittelbar der Bewegung der Antriebswelle folgt, ohne dass die Antriebswelle einen Leerlauf aufweist.

Erfindungsgemäß kann dazu ein Anschlag zwischen einer Anschlagposition, in welcher er als Mitnehmer für den Dorn dient, und einer Freigabeposition, in welcher der Dorn an dem Anschlag vorbei führbar ist, bewegbar ausgebildet sein. Dies lässt sich besonders einfach durch federvorbelastete Bolzen erreichen, die während der Rotation der Kugelstange bzw. des Leitkurvenkörpers durch eine in dem Rahmen des Schwenkantriebs um den Leitkurvenkörper herum ausgebildete Führung vor und zurück gedrückt werden. Die Bolzen weisen einen Vorsprung auf, welcher in der Anschlagposition als Anschlag und/oder Mitnehmer für den Dorn dient und in der Freigabeposition so verschoben ist, dass der Dorn an dem Anschlag vorbei bewegbar ist.

Um ein unbeabsichtigtes Verdrehen der Kugelstange zu verhindern, kann in dem Leitkurvenkörper ferner eine Drehsperre vorgesehen sein, welche insbesondere durch den Dorn betätigbar ist. Vorteilhafterweise ist die Drehsperre aktiv, solange sie nicht durch den Dorn betätigt wird. Dazu kann die Drehsperre einfacher Weise zwischen den zwei Anschlägen angeordnet sein, so dass der Dorn die Drehsperre dann entriegelt, wenn er zwischen den zwei Anschlägen festgelegt ist und eine Rotation der Kugelstange bewirken soll. Die Drehsperre kann als kippbarer Bügel ausgebildet sein, welcher in der Betriebsstellung und/oder der Ruhestellung in den Rahmen, in welchem die Kugelstange mit dem Leitkurvenkörper bzw. das Kippgelenk gelagert ist, einrastbar ist. Der Bügel ist vorzugsweise mit einer Feder vorbelastet und durch den Dorn entgegen der Federvorspannung bewegbar, so dass der Bügel in seine Entriegelungsposition gebracht wird, wenn der Dorn den Bügel beispielsweise nach unten drückt. Eine entsprechende Drehsperre kann auch bei der nachfolgend beschriebenen Ausführungsform vorgesehenen sein, welche jedoch nicht durch den Dorn ausgelöst wird, sondern direkt an der Welle angreifen kann und durch einen geeigneten Führungsmechanismus bspw. in dem Rahmen des Schwenkantriebs betätigbar ist.

Bei der vorerwähnten alternativen Anhängerkupplung weist die Kurvenfläche des Leitkurvenkörpers ein Kupplungsglied auf, welches aufgrund einer Führung an der Kurvenfläche des Schwenkkurvenkörpers zu einem Verschwenken des Leitkurvenkörpers führt. Durch das die Kurvenflächen des Schwenkkurvenkörpers und des Leitkurvenkörpers verbindende Kupplungsglied kann bei einem ähnlichen Verstellweg und Aufbau der Kurvensteuerung ein größerer Verstellspielraum für die Kugelstange erreicht werden, da durch das Kupplungsglied weitere Verstellfreiheitsgrade, bspw. ein größerer Kippwinkel um die Kippachse des Leitkurvenkörpers, erreichbar ist.

Einfacher Weise kann die Kurvenfläche des Schwenkkurvenköpers als Führung für das Kupplungsglied eine Nut aufweisen. Zur Führung ist dann in der Nut ein bolzenartiges Element, bspw. auch in Form eines Rollers, geführt, welches das Kupplungsglied unmittelbar oder mittelbar führt.

Die Nutführung kann erfindungsgemäß so ausgebildet sein, dass an dem Kupplungsglied ein an dem Schwenkkurvenkörper geführter Mitnehmer angreift, welcher an dem Kupplungsglied angelenkt ist. Die Anlenkung des Mitnehmers kann vorzugsweise die gleiche Schwenkachse aufweisen wie die Schwenkrichtung zwischen dem Kupplungsglied und dem Leitkurvenkörper und/oder die Schwenkrichtung des Leitkurvenköpers in dem Gehäuse des Schwenkantriebs. Der Mitnehmer und das Kupplungsglied sind damit Teil eines kurvengesteuerten Gestänges, das Leit- und Schwenkkurvenkörper miteinander verbindet.

Vorzugsweise kann die Führung entlang des dem Leitkurvenkörper zugewandten Rands des Schwenkkurvenkörpers ausgebildet sein, wobei der Rand des Schwenkkurvenkörpers dann die Kurvenfläche des Schwenkkurvenkörpers bildet.

Bei einer besonders bevorzugten Ausführungsform der Erfindung ist die Führung bereichsweise, insbesondere im Bereich des Dorns des Schwenkkurvenkörpers, überlappend ausgebildet ist, wobei die überlappenden Bereiche der Führung an den entgegengesetzten Enden des durch die Führung definierten Verstellwegs ausgebildet sind. Die überlappenden Bereiche weisen somit einen unterschiedlichen Abstand zu dem Leitkurvenkörper auf und führen dazu, dass der Leitkurvenkörper in den Endstellungen des Verstellweges um verschiedene Winkel verkippt ist.

Das Kupplungsglied kann sowohl als an dem Leitkurvenkörper angelenkter Bügel oder als Langloch ausgebildet sein. Beide Ausführungsformen des Kupplungsgliedes erlauben eine Verkippung des Kupplungsgliedes relativ zu dem Leitkurvenkörper.

Gemäß einer besonders bevorzugten Ausführungsform der vorliegenden Erfindung ist an der Anhängerkupplung eine mit dem Schwenkantrieb verbundene, verschwenkbare Steckdose vorgesehen, welche in der Betriebsstellung der Kugelstange in einer sichtbaren und in der Ruhestellung der Kugelstange in einer nicht sichtbaren Stellung ist. In der sichtbaren Stellung ist die Steckdose insbesondere benachbart zu der Kugelstange angeordnet und einfach von vorne zugänglich. In der Ruhestellung kann die Steckdose dagegen hinter die Stoßstange eingeschwenkt werden, so dass sie nicht mehr sichtbar ist.

Zur Erhöhung der Betriebssicherheit ist es vorteilhaft, wenn die Anhängerkupplung ferner eine Verriegelung der Kugelstange im Betriebszustand aufweist, welche insbesondere zwei in dem Rahmen verschiebbare Bolzen aufweist, welche in die Kugelstange einfahrbar sind. Diese Bolzen legen die Kugelstange sicher an dem Rahmen des Schwenkantriebs fest, so dass ein unbeabsichtigtes Verschwenken der Kugelstange ohne Entriegelung nicht möglich ist.

Einfacher Weise wird die Verriegelung über einen von der Antriebswelle mitbewegten Exzenter über ein Gestänge betätigt. Der Exzenter kann beispielsweise als Scheibe mit einer Durchgangsöffnung für die Antriebswelle und einer Steuer- bzw. Führungsnut ausgebildet sein, welche exzentrisch um die Antriebswelle verläuft. In die Führungsnut greift ein Führungsbolzen, Pin oder Rillenkugellager ein, welcher das Gestänge bewegt und dadurch die Bolzen zwischen der Verriegelungs- und der Entriegelungsposition hin und her bewegt. Ferner kann die Scheibe mit der Führungsnut erfindungsgemäß mit der Antriebswelle und/oder dem Schwenkkurvenkörper ver- und entriegelbar ausgebildet sein, abhängig von der aktuellen Drehposition der Antriebswelle. Dadurch kann zu gewissen Stadien der Schwenkbewegung der Kugelstange verhindert werden, dass die Führungsnut mitbewegt wird, um den Zeitpunkt des Ver- und Entriegelns der Kugelstange genau abstimmen zu können. Diese Anordnung eines von der Antriebswelle mitbewegten Exzenters hat den Vorteil, dass die Verriegelung automatisch während des Drehvorgangs der Antriebswelle erreicht wird, ohne dass eine gesondert betätigte Verriegelung notwendig ist.

Eine besonders hohe Kraftübertragung zwischen Anhängerkupplung und Rahmen des Schwenkantriebs kann erreicht werden, wenn der Rahmen zwei getrennte Rahmenteile aufweist, die insbesondere unabhängig voneinander an Halteelementen des Fahrzeugs festlegbar sind. So kann die Kugelstange oder das Kippgelenk mit Kugelstange in dem einen Rahmenteil sicher fixiert werden. Die Bolzen der Verriegelung können in dem anderen Rahmenteil geführt werden, so dass die Bolzen in der verriegelten Stellung Kraft von der Kugelstange auf das zweite Rahmenteil übertragen, welches unhängig von dem ersten Rahmenteil Kraft aufnehmen kann.

Vorzugsweise ist die Antriebswelle zum Verfahren der Kugelstange zwischen der Ruheposition und der Betriebsposition um ganzzahlige Vielfache von 180°, insbesondere 360°, verdrehbar. Dazu können die Kurvenflächen der Kurvensteuerung und/oder der Exzenter entsprechend angepasst werden. Dies ist besonders geeignet für einen manuellen Antrieb, da die Endposition genau festgelegt werden kann und eine mühselige Kurbelarbeit mit besonders vielen Umdrehungen nicht notwendig ist. Eine Anpassung des Verdrehwegs zwischen Antriebswelle und manuellem Antrieb kann dagegen auch über ein Getriebe mit einer geringen Getriebeübersetzung erreicht werden. In diesem Fall kann die Verdrehung der Antriebswelle auch andere Werte als ganzzahlige Vielfache von 180° annehmen und optimal an eine einfach zu handhabende Kurvensteuerung angepasst werden.

Anstelle eines manuellen Antriebs kann die Anhängerkupplung erfindungsgemäß auch über einen Elektromotor angetrieben werden, welcher die Antriebswelle direkt oder über ein Getriebe dreht. Da die Kurvensteuerung aufgrund der Verbindung der Antriebswelle mit dem Schwenkkurvenkörper und der Kupplungsstange mit dem Leitkurvenkörper besonders leichtgängig ist, ist hierfür ein kleiner Elektromotor ohne besonders großes Drehmoment oder eine hohe Getriebeübersetzung ausreichend.

Eine Verdrehung von 360° ist insbesondere für eine Anhängerkupplung vorteilhaft, welche an einem Personenkraftwagen zwischen der hinteren Rückwand des Personenkraftwagens und dem Stoßfänger oder der Stoßfängerverkleidung derart angebracht ist, dass die Anhängerkupplung in der Ruhestellung nicht sichtbar ist. Dazu ist an die Antriebswelle eine Handbetätigung angeschlossen, welche in eine Blende des Kraftfahrzeugs integriert ist, die zwischen der Rückwand des Personenkraftwagens und der Stoßfängerverkleidung, insbesondere im Bereich der Kofferraumöffnung, angeordnet ist. Diese kann nach einer Drehung von 360° in dieselbe Position zurückgelegt werden, so dass für die Betriebstellung und die Ruhestellung nur eine Aufnahmeposition in der Blende vorgesehen werden muss.

Eine hohe Betriebssicherheit lässt sich ferner dadurch erreichen, dass zum Feststellen der Betriebsstellung der Anhängerkupplung zwei voneinander unabhängige Sensoren vorgesehen sind. Deren Signal kann zur Anzeige des Betriebszustands und/oder für eine elektronische Steuerung der Anhängerkupplung bzw. des Schwenkantriebs verwendet werden.

Weitere Vorteile, Merkmale und Anwendungsmöglichkeiten der vorliegenden Erfindung ergeben sich auch der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von deren Zusammenfassung in den Ansprüchen oder deren Rückbezügen.

Es zeigen:
- Fig. 1: eine Seitenansicht der erfindungsgemäßen Anhängerkupplung in der Schwenkbewegung mit einer Darstellung wesentlicher Teile des Schwenkantriebs in einer ersten Ausführungsform;
- Fig. 2: eine Detailansicht eines Schwenkkurvenkörpers und eines Leitkurvenkörpers des Schwenkantriebs der Anhängerkupplung gemäß Fig. 1;
- Fig. 3: eine Seitenansicht der Anhängerkupplung gemäß Fig. 1 in der Ruhestellung mit einer Darstellung wesentlicher Teile des Schwenkantriebs;
- Fig. 4: eine Explosionszeichnung der Anhängerkupplung gemäß Fig. 1 mit wesentlichen Teilen des Schwenkantriebs;
- Fig. 5: eine Aufsicht auf Anschläge zur Rotation der Kugelstange und eine Drehsperre des Schwenkantriebs gemäß Fig. 1;
- Fig. 6: eine Detailansicht der Anschläge und der Drehsperre gemäß Fig. 5;
- Fig. 7: eine Seitenansicht wesentlicher Teile der Anhängerkupplung gemäß Fig. 1 bei abgesenkter Kupplung mit einer Verriegelung;
- Fig. 8: eine Explosionszeichnung der Anhängerkupplung gemäß Fig. 1 mit wesentlichen Teilen des Schwenkantriebs und der Verriegelung;
- Fig. 9: eine Rückansicht der erfindungsgemäßen Anhängerkupplung gemäß Fig. 1 vor Verriegelung der Kugelstange;
- Fig. 10: eine Rückansicht der erfindungsgemäßen Anhängerkupplung gemäß Fig. 1 nach Verriegelung der Kugelstange;
- Fig. 11: die Kurvensteuerung und die Verriegelung gemäß einer zweiten Ausführungsform der Erfindung;
- Fig. 12: wesentliche Teile der Anhängerkupplung gemäß der zweiten Ausführungsform während der Schwenkbewegung;
- Fig. 13: die Kurvensteuerung der Anhängerkupplung gemäß einer dritten Ausführungsform und
- Fig. 14: die Kurvensteuerung der Anhängerkupplung gemäß einer vierten Ausführungsform.

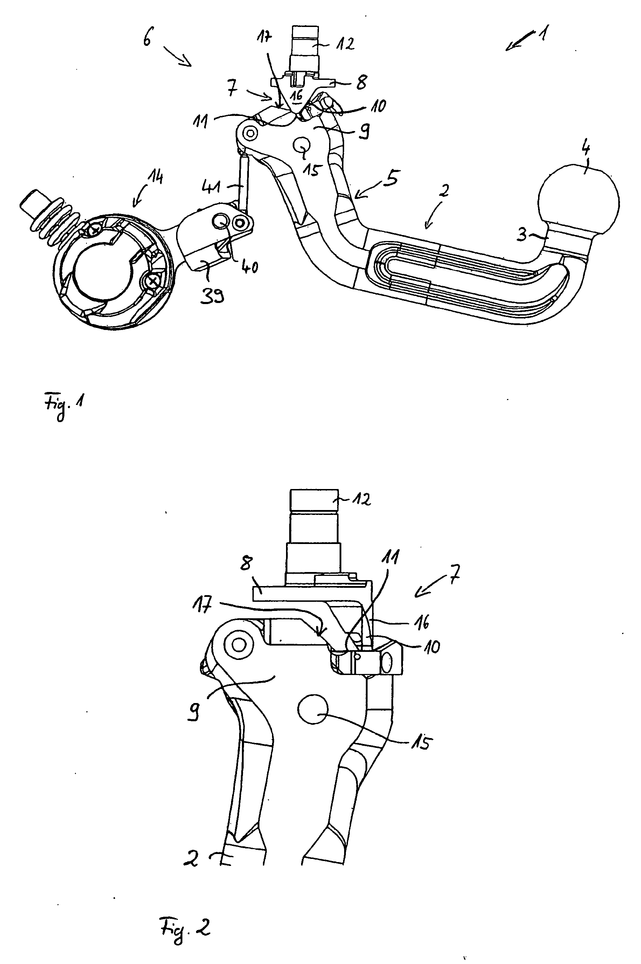

Die in Fig. 1 dargestellte Anhängerkupplung 1 ist insbesondere zur Montage an Personenkraftwagen geeignet. Sie weist eine Kugelstange 2 auf, welche an ihrem freien, abgekröpften Ende 3 eine Kupplungskugel 4 trägt. An ihrem anderen, dem freien Ende 3 entgegengesetzten Ende 5 ist die Kugelstange 2 mit einem Schwenkantrieb 6 zum Verschwenken der Kugelstange 2 zwischen einer Betriebsstellung und einer Ruhestellung fest verbunden. Der Schwenkantrieb 6 weist eine Kurvensteuerung 7 mit einem Schwenkkurvenkörper 8 und einem Leitkurvenkörper 9 auf. Der Schwenkkurvenkörper 8 weist eine Kurvenfläche 10 und der Leitkurvenkörper 9 eine Kurvenfläche 11 auf, die derart zusammenwirken, dass die Kugelstange 2 mit ihrem freien Ende 3 auf einer vorgegebenen Kurve zwischen ihrer Betriebsstellung und ihrer Ruhestellung verschwenkbar ist.

Dazu weist der Schwenkantrieb 6 eine nach außen geführte Antriebswelle 12 auf, welche fest mit dem Schwenkkurvenkörper 8 des Schwenkantriebs 6 verbunden ist. Entsprechend ist der Leitkurvenkörper 9 fest mit der Kugelstange 2 verbunden, wobei der Leitkurvenkörper 9 in einem in Fig. 1 nicht dargestellten Rahmen 13 des Gehäuses des Schwenkantriebs 6 dreh- und kippbar gelagert ist (vgl. Fig. 4).

Ferner ist an der Anhängerkupplung 1 eine schwenkbare Steckdose 14 angeordnet, welche mit dem Verschwenken der Anhängerkupplung 1 nach oben und unten geklappt wird.

Die Funktionsweise der Kurvensteuerung 7 wird nachfolgend mit Bezug auf die Detaildarstellung des Schwenkkurvenkörpers 8 und des Leitkurvenkörpers 9 in Fig. 2 näher erläutert. Der Schwenkkurvenkörper 8 ist fest mit der Antriebswelle 12 und der Leitkurvenkörper 9 fest mit der Kugelstange 2 verbunden. Ferner ist der Leitkurvenkörper 9 über eine senkrecht in der Darstellungsebene verlaufende Kippachse 15 kippbar und um die Drehachse der Antriebswelle 12 drehbar in dem in Fig. 2 nicht dargestellten Rahmen 13 gelagert.

Der Schwenkkurvenkörper 8 weist einen Dorn 16 auf, der von dem Schwenkkurvenkörper 8 vorsteht und an dem die Kurvenfläche 10 des Schwenkkurvenkörpers 8 ausgebildet ist. Zum Zusammenwirken mit der Kurvenfläche 10 des Schwenkkurvenkörpers 8 ist auf dem Leitkurvenkörper 9 eine Kurvenfläche 11 ausgebildet, die an der Kurvenfläche 10 des Schwenkkurvenkörpers 8 anliegt. Durch Drehung der Antriebswelle 12 wird der Dorn 16 um die Achse der Antriebswelle 12 gedreht und gleitet dabei auf der Kurvenfläche 11 des Leitkurvenkörpers 9 entlang. Durch entsprechende Erhöhungen und Vertiefungen auf dem Leitkurvenkörper 9 wird der in dem Rahmen 13 dreh- und kippbar gelagerte Leitkurvenkörper 9 durch den feststehenden Dorn 16 zum Ausweichen gezwungen, wodurch er die an dem Leitkurvenkörper 9 festgelegte Kugelstange 2 auf einer durch die Form der Kurvenfläche 11 des Leitkurvenkörper 9 vorgegebenen Kurve bewegt. Insbesondere ist in der Kurvenfläche 11 eine Schräge 17 ausgebildet, welche derart mit der Kurvenfläche 10 des Dorns 16 zusammenwirkt, dass der Leitkurvenkörper 9 mit der Kugelstange 2 um die Kippachse 15 gekippt wird, wodurch sich die Kugelstange je nach Bewegungsrichtung der Antriebswelle 12 hebt oder absenkt. Dieses Zusammenwirken des Dorns 16 mit der Schräge 17 ist Fig. 1 besonders gut zu entnehmen. Diese zeigt die Kugelstange 2 während der Schwenkbewegung, wobei der Dorn 16 unmittelbar an der Schräge 17 angeordnet ist und diese zum Ausweichen zwingt. Dies führt dazu, dass der Leitkurvenkörper 9 um die Kippachse 15 gekippt wird, so dass sich die Kugelstange 2 hebt oder senkt.

Für die Dreh- und Kippbewegung ist die Kugelstange 2 um die Kippachse 15 kippbar in einem in Fig. 3 dargestellten Kippgelenk 42 angelenkt. In Fig. 3 befinden sich die Kugelstange 2 und die schwenkbare Steckdose 14 in der hochgeklappten Ruhestellung, in der die Kugelstange 2 und die Steckdose 14 durch den Stoßfänger des Personenkraftwagens im Wesentlichen verdeckt sind. In dieser Stellung wird die Kugelstange 2 gegen einen in dem Rahmen 13 vorgesehenen Gummipuffer 54 gedrückt, so dass die Kugelstange 2 sicher festgehalten ist und keine Klappergeräusche auftreten.

In der Explosionszeichnung gemäß Fig. 4 ist zu erkennen, wie das Kippgelenk 42 drehbar in den Rahmen 13 des Schwenkantriebs 6 aufgenommen ist. Das Kippgelenk 42 weist eine im Wesentlichen zylindrische Außenform auf und ist in eine entsprechende Öffnung 43 des oberen Rahmenteils 13a drehbar aufgenommen. Im Inneren des Kippgelenks 42 ist der Schwenkkurvenkörper 8 mit der Antriebswelle 12 drehbar aufgenommen, der mit dem an der Kugelstange 2 festgelegten Leitkurvenkörper 9 zusammenwirkt. Die Kugelstange 2 ist an der Kippachse 15 an dem Kippgelenk 42 angelenkt, wobei die Kugelstange 2 von unten durch das untere Rahmenteil 13b durchgreift. Der Schwenkantrieb 6 wird durch ein als Deckel dienendes Rahmenteil 13c von oben abgeschlossen.

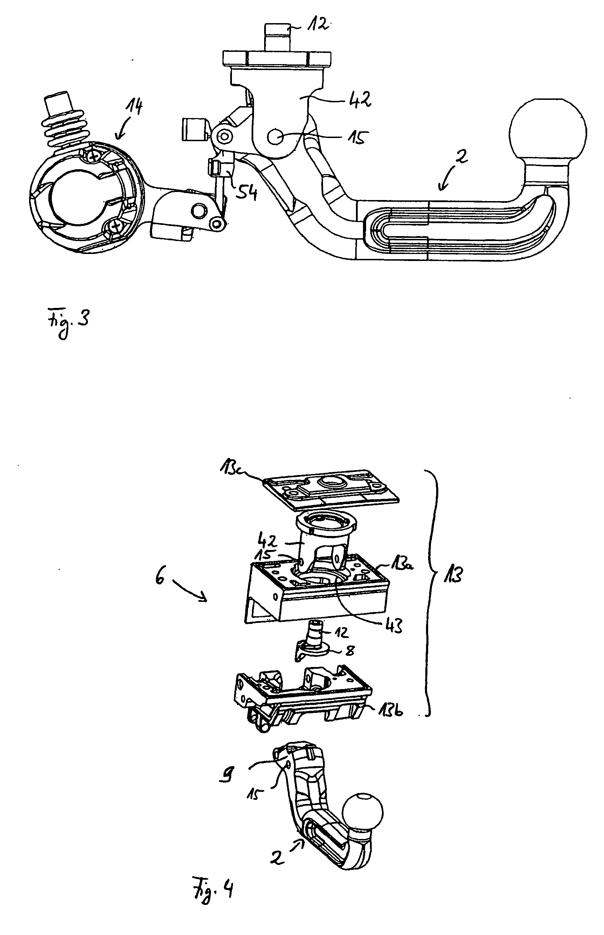

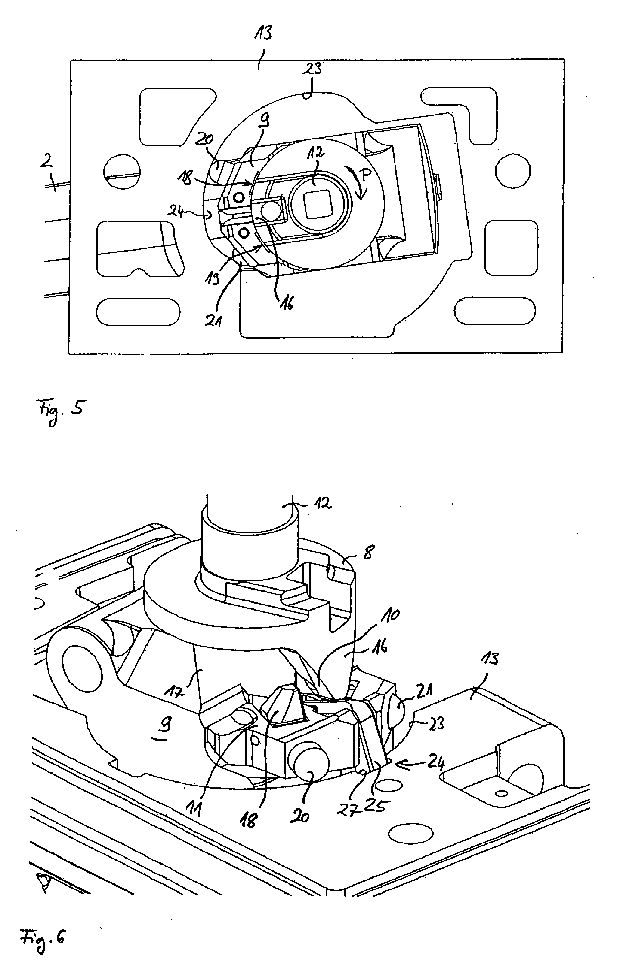

Um die Kugelstange 2 zwischen einer Betriebsstellung und einer Ruhestellung hin und her bewegen zu können, ist neben der vorbeschriebenen Kippbewegung um die Kippachse 15 auch eine Drehung der Kugelstange 2 um die Drehrichtung der Antriebswelle 12 notwendig. Dazu ist bei der ersten Ausführungsform der Erfindung in dem Leitkurvenkörper 9 für jede Rotationsrichtung ein Anschlag 18, 19 vorgesehen, an welchem der von der Antriebswelle 12 gedrehte Dorn 16 anstößt. Dies ist den Fig. 5 und 6 zu entnehmen. In der Aufsicht von Fig. 5 sind Bolzen 20, 21 dargestellt, die durch eine nicht dargestellte Feder nach außen vorgespannt sind. In dem Rahmen 13 ist eine Führung 23 um den Leitkurvenkörper 9 herum ausgebildet, die entweder ein Vorstehen der Bolzen 20, 21 ermöglicht (in Fig. 5 und 6: Bolzen 20) oder die Bolzen 20, 21 gegen die Kraft der Feder zurückdrückt (in Fig. 5 und 6: Bolzen 21). An den Bolzen 20, 21 sind die Anschläge 18, 19 angebracht, die mit den Bolzen nach vorne oder hinten verschoben werden.

In dem nach vorne geschobenen Zustand bilden die Anschläge 18,19 einen Mitnehmer für den Dorn 16, der an dem Anschlag 18 nicht vorbei gedreht werden kann (Fig. 6). Der in Fig. 6 nicht dargestellte Anschlag 19 des von der Führung 23 zurück gedrückten Bolzens 21 stellt dagegen kein Hindernis für den Dorn 16 dar, so dass Dorn 16 an diesem vorbei gedreht werden kann.

Wenn, wie in Fig. 5 dargestellt, die Antriebswelle 12 in Richtung des Pfeiles P gedreht wird, kann der Dorn 16 an dem zurückgedrückten Anschlag 19 des Bolzens 21 vorbeifahren und stößt gegen den Anschlag 18 des Bolzens 20. Sobald der Dorn 16 gegen den Anschlag 18 anstößt, dreht der Dorn 16 den in dem Rahmen 13 drehbar gelagerten Leitkurvenkörper 9 um die Achse der Antriebswelle 12 mit. Dadurch gelangt auch der Bolzen 21 in den Bereich der Führung 23, der ein Herausstehen des Bolzens 21 ermöglicht, so dass der Dorn 16 von beiden Anschlägen 18, 19 eingefasst ist. Bei einer Umkehrung der Drehrichtung P würde der Dorn 16 in diesem Bereich also gegen den Anschlag 19 anstoßen, so dass sich die Drehrichtung der Kugelstange 2 unmittelbar umkehren würde.

In Drehrichtung P rotiert der Leitkurvenkörper 9 dagegen mit der daran festgelegten Kugelstange 2 weiter, bis der Bolzen 20 in den Bereich der Führung 23 kommt, in der der Bolzen 20 mit dem Anschlag 18 gegen die Federkraft zurück gedrückt wird und den Dorn 16 freigibt. Wie Fig. 5 zu entnehmen, weist die Führung 23 einen etwa 90° umfassenden Bereich auf, in welchem die Bolzen 20, 21 nach außen vorstehen können, so dass die Kugelstange 2 mit gedreht wird. Dies entspricht also in etwa einer 90°-Drehung der Kugelstange 2 zwischen der Betriebsstellung und der Ruhestellung. Je nach gewünschter Drehung kann der Fachmann die Führung 23 entsprechend anpassen.

Nach Freigabe des Dorns 16 durch den Anschlag 18 in der Freigabeposition wird der Dorn 16 weiter gedreht und stößt gegen die in Fig. 6 dargestellte Schräge 17 der Kurvenfläche 11, um ein Verkippen der Kugelstange 2 zu bewirken.

Zusätzlich zu den Anschlägen 18, 19 ist zwischen den Bolzen 20, 21 in den Fig. 5, 6 eine Drehsperre 24 dargestellt, die - wie Fig. 6 zu entnehmen - als kippbar abgewinkelter Bügel 25 ausgebildet ist, der durch eine nicht dargestellte Feder nach oben gedrückt wird. Dadurch greift er in eine Ausnehmung 27 in dem Rahmen 13 ein und verhindert ein Verdrehen des Leitkurvenkörpers 9 mit der Antriebswelle 12. Die Drehsperre 24 wird dadurch entriegelt, dass der Dorn 16 den Bügel 25 gegen die Kraft der Feder nach unten drückt. Dies ist genau dann der Fall, wenn der Dorn 16 an dem Anschlag 18, 19 anliegt, so dass dann eine Verdrehung möglich ist. Daher ist die Drehsperre 24 zwangsläufig dann entriegelt, wenn der Dorn 16 an den Anschlägen 18, 19 anstößt und die Kugelstange mitdreht.

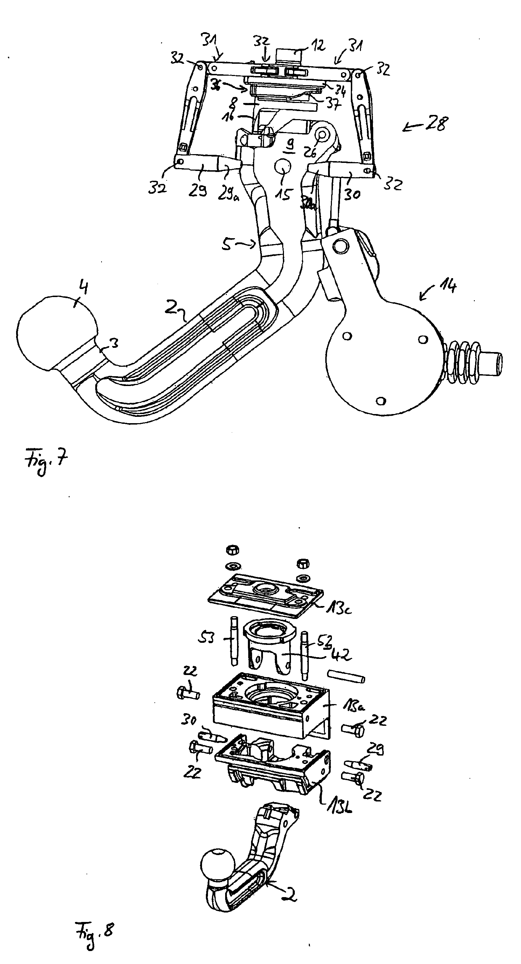

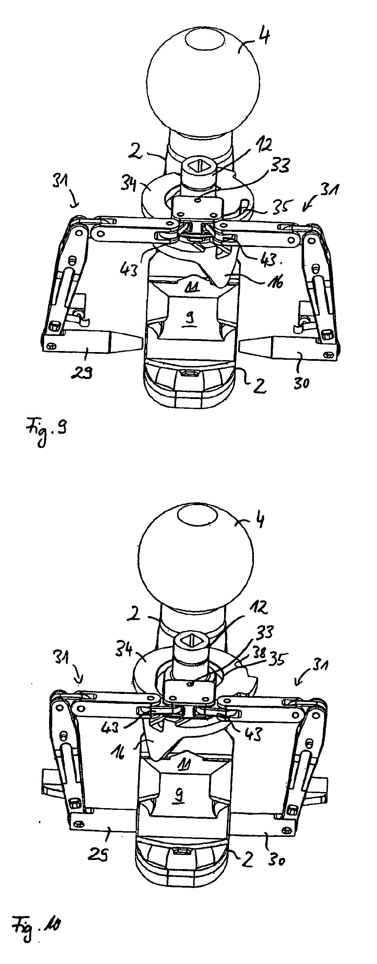

In Fig. 7 ist eine Verriegelung 28 dargestellt, mit der die Kugelstange 2 im Betriebszustand sicher festgelegt werden kann. Dazu sind zwei in dem Rahmen 13 geführtre, verschiebbare Bolzen 29, 30 vorgesehen, die über ein Gestänge 31 betätigt werden. Wie der Explosionszeichnung Fig. 8 zu entnehmen, sind die Bolzen 29, 30 in dem unteren Rahmenteil 13b geführt. Das unter Rahmenteil 13b und das obere Rahmenteil 13a sind unabhängig voneinander über Befestigungsbolzen 22 an dem Kraftfahrzeug festgelegt. Wenn die Bolzen 29, 30 im Betriebszustand in die Kugelstange 2 eingreifen, nehmen sie Kraft auf und übertragen sie auf das untere Rahmenteil 13b, das separat an dem Kraftfahrzeug festgelegt ist und daher zusätzlich zu dem Rahmenteil 13a Kraft aufnehmen kann. Alle Rahmenteile 13a, 13b und 13c sind über vertikale Stiftschrauben aneinander festgelegt.

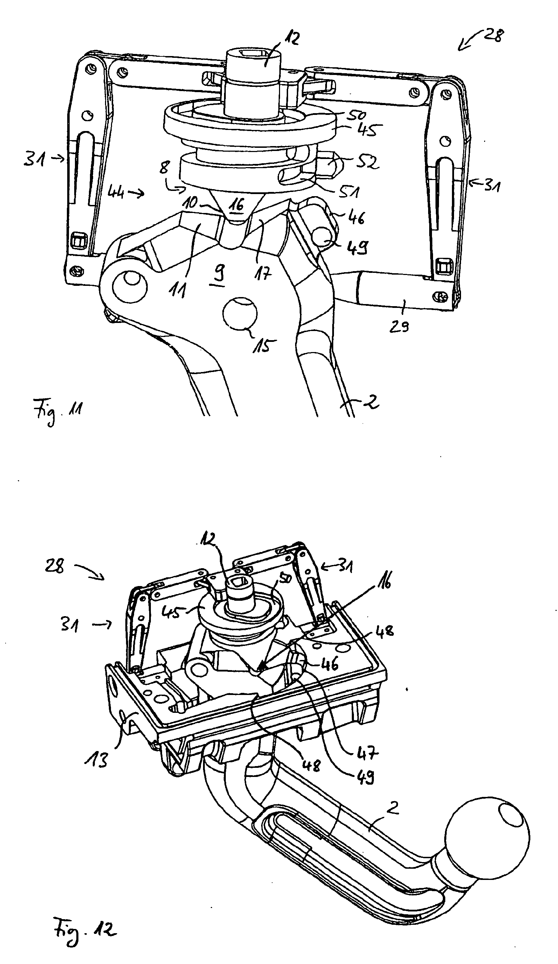

Das Gestänge 31 greift an den Bolzen 29, 30 an und führt über mehrere Gelenke 32 zu einem Pin 33, der in einem von der Antriebswelle 12 mitbewegten Exzenter 34 geführt wird (vgl. Fig. 9, 10). Durch die Führung des Pins 33 in dem Exzenter 34 wird das Gestänge 31 derart bewegt, dass die Bolzen 29, 30 in der Betriebsstellung der Kugelstange 2 in entsprechende Öffnungen 26 der Kugelstange 2 eingefahren werden (Zustand gemäß Fig. 10).

In den Bolzen 29, 30 sind Federn aufgenommen, die die Bolzenvorderteile 29a, 30a von dem Bolzen 29, 30 jeweils in Verschlussrichtung nach vorne vorspannen. Dadurch ist die Verriegelung 28 selbstnachstellend aufgebaut. Außerdem ist das Gelenk 32 zwischen den Bolzen 29 bzw. 30 und dem Gestänge 31 als doppeltes Langloch in Richtung jedes Bolzens 29, 30 und im Wesentlichen senkrecht dazu in Richtung des Gestänges 31 ausgebildet, um eine optimale Ausrichtung der Bolzen 29, 30 zu erreichen. Die Verriegelung kann durch eine Vorspannung auf die Bolzen 29, 30 auch ohne die in den Bolzen 29, 30 aufgenommenen Federn selbstnachstellend ausgebildet sein.

In den Fig. 9 und 10, in der die Anhängerkupplung 1 in ihrer Betriebsstellung von schräg oben aus der Rückansicht vor bzw. nach erfolgter Verrieglung dargestellt ist, ist die Führung des Gestänges 31 durch den Exzenter 34 gut zu erkennen. Der Exzenter 34 ist durch eine Scheibe mit einer zentralen Ausnehmung zum Durchtritt der Antriebswelle 12 ausgebildet, in der eine Führungsnut 35 vorgesehen ist, in der der Pin 33 des Gestänges 31 geführt wird. Anstelle des Pins 33 kann auch ein Rillenkugellager zur Führung verwendet werden. Durch eine geeignete, exzentrische Formgebung der Führungsnut 35 wird das Gestänge 31 über die Gelenke 32 derart verschoben, dass die Bolzen 29, 30 in entsprechende Öffnungen 26 der Kugelstange 2 eingreifen. Dazu dreht der Exzenter 34 mit der Antriebswelle 12 mit. In der verriegelten Stellung der Kugelstange 2 befinden sich Knebel 43 in gerader Verlängerung der Gestänges 31, so dass eine Bewegung der Gestänges 31 ausgeschlossen ist und eine besonders sichere Verriegelung stattfindet, weil die Knebel 43 keine Kraftkomponente in Richtung der Verschiebung des Gestänges 31 bewirken können. In diesem Fall sind die Kräfte des Gestänges 31 senkrecht zu der möglichen Bewegungsrichtung des Steuerkurvenmitnehmers mit dem Pin 33.

Damit der Exzenter 34 sicher mit der Antriebswelle 34 mitgedreht wird, ist eine in Fig. 7 dargestellte Verriegelung 36 zwischen dem Schwenkkurvenkörper 8 und dem Exzenter 34 vorgesehen, die je nach Drehstellung der Drehachse 12 durch eine Führung 37 ver- bzw. entriegelt wird, so dass der Exzenter 34 nur mit der Antriebswelle 12 mitdreht, soweit dies gewünscht ist. Um eine unerwünschte Drehung des Exzenters 34 zu verhindern, kann der Exzenter 34 durch eine federbelastete Kugel fixiert werden, die in eine Vertiefung 38 des Exzenters eingreift (Fig. 10), wenn die Verriegelung 36 zwischen dem Schwenkkurvenkörper 8 und dem Exzenter 34 gelöst ist.

Mit Bezug auf Fig. 1 wird nachfolgend der Mechanismus der schwenkbaren Steckdose 14 näher erläutert. Diese ist an einem Halter 39 über eine Drehachse 40 an dem in Fig. 1 nicht dargestellten Gehäuse des Schwenkantriebs 6 gelagert. Neben der Drehachse 40 ist ein in einem kurzen Langloch geführter Stift 41 in dem Halter 39 festgelegt, der durch eine Öffnung in dem Gehäuse des Schwenkantriebs 6 geführt wird und gegen einen Vorsprung des Leitkurvenkörpers 9 anstößt.

Wenn die Kugelstange 2 um die Kippachse 15 gekippt wird, überträgt der Stift 41 die Bewegung des Leitkurvenkörpers 9 auf den Halter 39, der um die Drehachse 40 rotiert. Dadurch wird die Steckdose 14 von einer nicht sichtbaren Position in der Ruhestellung der Kugelstange 2 in eine sichtbare Position in der Betriebsstellung der Kugelstange 2 und umgekehrt bewegt, wobei der Halter 39 in Richtung seiner sichtbaren Stellung mit einer Feder vorgespannt ist.

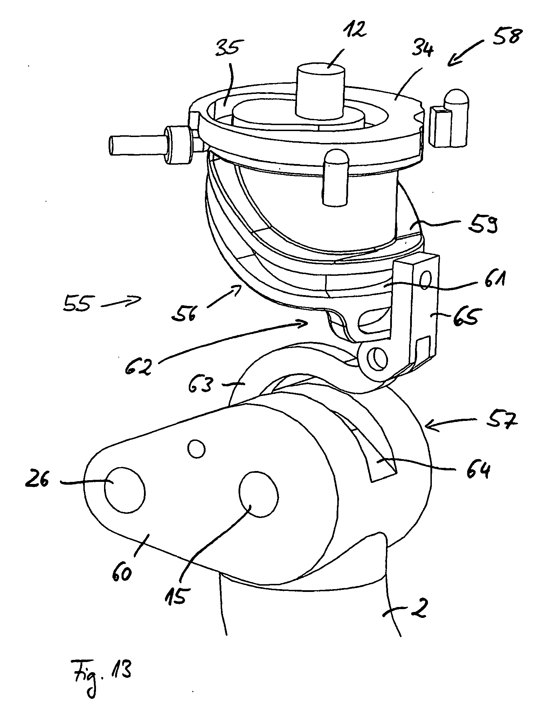

Fig. 11 zeigt eine zweite Ausführungsform einer Anhängerkupplung gemäß der Erfindung mit einer vereinfachten Kurvensteuerung 44 und einem vereinfachten Exzenter 45 zum Antreiben der Verriegelung 28 mit dem Gestänge 31. Im Übrigen ist die zweite Anhängerkupplung entsprechend der zuvor beschrieben Anhängerkupplung aufgebaut, so dass auf eine detaillierte Beschreibung gleicher Merkmale verzichtet wird, für die auch dieselben Bezugszeichen verwendet werden.

Die vereinfachte Kurvensteuerung 44 weist in gleicher Weise einen Schwenkkurvenkörper 8 mit einem Dorn 16 sowie einen entsprechenden Leitkurvenkörper 9 mit einer Kurvenfläche 11 auf, die mit der Kurvenfläche 10 des Dorns 16 zusammenwirkt. Zum Ausführen der Kippbewegung der Kugelstange 2 ist in der Kurvenfläche 11 eine Schräge 17 ausgebildet. Allerdings weist diese Ausführungsform keine separaten Anschläge zum Drehen der Kugelstange 2 auf. Vielmehr wird ausgenutzt, dass für die Kippbewegung eine wesentlich höhere Kraft aufgewendet werden muss als für das Drehen der Kugelstange 2. Wenn daher der Dorn 16 seitlich an eine Erhöhung in der Kurvenfläche 11 anstößt, wird die drehbar gelagerte Kugelstange 2 durch eine Drehbewegung ausweichen, bis ein Anschlag 46 an einer Begrenzung 48 einer in dem Rahmen 13 bzw. dem unteren Rahmenteil 13b entsprechend ausgebildeten Führung 47 (vgl. Fig. 12) anschlägt. Dann wird die Kugelstange 2 nach oben gekippt, wobei der Anschlag 46 in eine in dem oberen Rahmenteil 13a vorgesehene Führung eingefahren wird.

Seitlich sind in dem Anschlag 46 auf jeder Seite federbelastete Kugeln 49 vorgesehen, die sich an den Begrenzungen 48 der Führung 47 anstoßen, sobald der Anschlag 46 aus der nicht dargestellten Führung in dem oberen Rahmenteil 13a freigeben wird. Dadurch wird der Anschlag 46 von der Führung in dem oberen Rahmenteil soweit weggedrückt, dass er ohne eine Drehung in die Gegenrichtung, durch die die federbelastete Kugel 49 vollständig in den Anschlag 46 hineingedrückt wird, nicht zurückkippen kann, weil der Anschlag 46 neben der Führung an der Unterseite des oberen Rahmenteils 13a anstößt. Dadurch wird verhindert, dass die Kugelstange 2 bei einer unerwartet schnellen Drehung der Antriebswelle, wie sie bspw. bei einer manuellen Betätigung vorkommen kann, nicht rotiert, sondern unmittelbar zurück in die gleiche Stellung schwenkt. Durch die federbelasteten Kugeln 49 kann daher eine Rotation der Kugelstange 2 ohne Störung des Bewegungsablaufs mit Sicherheit erreicht werden. Durch die Rotationsführung des Anschlags 46 an der Unterseite des oberen Rahmenteils wird auch verhindert, dass die Kugelstange 2 während der Rotation nach oben kippt, wenn durch eine plötzliche Änderungen der Drehgeschwindigkeit (Drehbeschleunigung) der Antriebswelle 12 bei einem bspw. manuellen Antrieb ein Kraftmoment um die Kippachse 15 der Kugelstange 2 erzeugt wird, das höher ist als die Schwerkraft der Kugelstange für die Rotation.

Bei dieser Ausführungsform der Anhängerkupplung 1 wird also auch die Rotation alleine durch die Ausbildung der insbesondere für die Verkippung vorgesehenen Kurvenflächen 10, 11 erreicht und auf die Ausbildung eines gesonderten Rotationssystems mit Anschlägen 18, 19 verzichtet. Dadurch werden insgesamt Bauteile eingespart und die Montage wird vereinfacht. Allerdings ist der Gesamtbewegungsablauf bei der ersten Ausführungsform sicherer definiert, so dass sich diese Ausführungsform insbesondere für einen elektromotorisch gesteuerten Antrieb der Anhängerkupplung anbietet.

Bei der zweiten Ausführungsform der Erfindung ist auch der Exzenter 45 zur Steuerung der Verriegelung 28 vereinfacht. Dieser ist fest mit der Antriebswelle 12 verbunden, so dass er bei der Drehung der Antriebswelle immer mitdreht. In dem Exzenter 45 ist eine durchlaufende Führungsnut 50 ausgebildet, in der der Stift 33 zum Steuern des Gestänges 31 und der Bolzen 29, 30 in der ersten Ausführungsform vergleichbarer Weise geführt ist. Da die Führungsnut 50 durchgehend ist, ist sie zu einer durch die Drehachse der Antriebswelle 12 verlaufende Achse spiegelsymmetrisch aufgebaut, wobei der Abstand der Führungsnut 50 zu der Drehachse im Verlauf der Führungsnut variiert, um die Exzenter-Steuerung zu ermöglichen. Dies hat zur Folge, dass das Gestänge 31 mit den Bolzen 29, 30 auch in der Ruheposition der Kugelstange 2 in die Verriegelungsposition gebracht sind, wobei die Bolzen 29, 30 jedoch nicht in die Kugelstange eingreifen, sondern an dieser vorbeigeführt werden.

Zur Erzeugung ausreichender Blockiermomente in der Endstellungen (Ruhestellung, Betriebsstellung) der Anhängerkupplung ist unter dem Exzenter 45 eine Nutführung 51 vorgesehen, in der ein Nutstein 52 geführt ist. Das nicht in der Nutführung geführte Ende des Nutsteins 52 ist axial verschiebbar in einem vertikalen Schlitz in dem Kippgelenk 42 der Anhängerkupplung 1 geführt, so dass der Nutstein 52 in der Höhenbewegung der Nutführung 51 folgen kann, gegenüber einer Verdrehung mit der Antriebsachse 12, an welcher die Nutführung 51 festgelegt ist, jedoch gesichert ist. Die Länge der Nutführung 51 ist an die zur Verstellung der Anhängerkupplung 1 benötigte Verdrehung der Antriebswelle 12 angepasst, so dass bei Erreichen des Endes der Nutführung 51 durch den Nutstein 52 ein entsprechendes Blockiermoment ausgelöst wird.

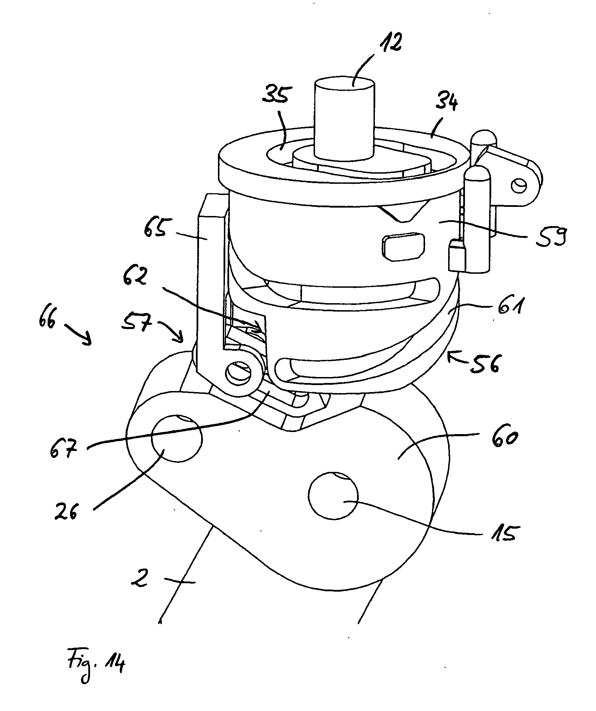

Fig. 13 zeigt als dritte Ausführungsform eine Kurvensteuerung 55, welche sich insbesondere im Bereich der Kurvenflächen 56, 57 und dem Aufbau der Drehsperre 58 von den zuvor beschriebenen Ausführungsformen unterscheidet. Die Drehsperre 58 dient jedoch demselben Zweck wie die in Bezug auf die Fig. 5 und 6 beschriebene Drehsperre 24 und ist im Grundsatz ähnlich aufgebaut. Der wesentliche Unterschied der Drehsperre 58 liegt darin, dass die Elemente der Drehsperre 58 vertikal ausgerichtet sind und sich unmittelbar auf die Welle 12 beziehen. Die konstruktiven Änderungen sind durch den unterschiedlichen Aufbau bedingt und werden nachfolgend nicht näher erläutert. Für ähnliche Teile werden ferner dieselben Bezugszeichen verwendet.

Gemäß der Darstellung in Fig. 13 ist der Schwenkkurvenkörper 59 mit der Antriebswelle 12 und der Leitkurvenkörper 60 mit der Kugelstange 2 fest verbunden. Die gesamte Kurvensteuerung 55 ist in einem hier nicht dargestellten Rahmen um die Achsrichtung der Welle 12 drehbar gelagert.

Die Kurvenfläche 56 des Schwenkkurvenkörpers 59 ist als Nut 61 in der äußeren Umfangsoberfläche des Schwenkkurvenkörpers 59 an dem dem Leitkurvenkörper 60 zugewandten Rand ausgebildet und verläuft dabei entlang eines zu dem Leitkurvenkörper 60 hin vorstehenden Dorns 62. An der Kurvenfläche 57 des Leitkurvenkörpers 60 ist ein Kupplungsglied 63 in Form eines Bügels angelenkt, so dass es um eine senkrecht zu der Richtung der Welle 12 verlaufende Achse schwenkbar ist. Das Kupplungsglied 63 ist in einer Ausnehmung 64 des Kurvenfläche 57 versenkbar.

Verbunden sind die Kurvenflächen 56, 57 des Schwenkkurvenkörpers 59 und des Leitkurvenkörpers 60 über einen Mitnehmer 65, welcher in Richtung der Achse der Welle 12 axial verschiebbar ist. Der Mitnehmer 65 ist über eine nicht dargestellte Verankerung in der Nut 61 geführt und an dem freien Ende des Kupplungsglieds 63 angelenkt. Eine Axialverschiebung des Mitnehmers 65 führt daher zu einem Verkippen des Leitkurvenkörpers 60 mit der daran festgelegten Kugelstange 2.

Im Bereich des Dorns 62 ist die Nut 61 in Umfangsrichtung des Leitkurvenkörpers 59 überlappend ausgebildet, d.h. im Bereich des Dorns 62 weist die Nut 61 zwei nebeneinander liegende Nutlinien auf, die in Achsrichtung der Welle 12 voneinander beabstandet sind. In diesem Bereich des Dorns 62 liegen auch die Endpunkte der durchgehenden Nut 61, welche der Betriebsstellung und der Ruhestellung der Kugelstange entsprechen.

Durch ein Verdrehen des mit der Antriebswelle 12 verbundenen Schwenkkurvenkörpers 59 relativ zu dem Leitkurvenkörper 60 wird der Mitnehmer 65 in der Nut 61 geführt und dabei in Achsrichtung der Welle 12 verschoben. Da die Kurvenfläche 56 des Schwenkkurvenkörpers dem Dorn 62 folgt, wird der Mitnehmer 65 während einer Drehbewegung der Antriebswelle 12 von der einen zu der anderen Endstellung der Nut 61 zunächst nach oben und dann wieder nach unten geführt. Diese Bewegung überträgt der Mitnehmer 65 auf das an dem Mitnehmer 65 und dem Leitkurvenkörper 60 angelenkte Kupplungsglied 63. Als Folge davon ergibt zunächst sich ein Abklappen der Kugelstange 2 nach unten, um bei dem Verfahren zwischen der Ruhestellung und der Betriebsstellung unter dem Stoßfänger des Kraftfahrzeugs durchgeführt werden zu können und anschließend ein Hochklappen in die Betriebs- bzw. die Ruhestellung, je nachdem, an welchem Ende der Nut 61 sich der Mitnehmer 65 befindet.

Da die Nut 61 im Bereich des Dorns 62, welcher den Endstellungen der Kugelstange 2 entspricht, in Axialrichtung der Welle 12 versetzt zueinander angeordnet sind, sind die Neigungswinkel der Kugelstange 2 in den Endpositionen unterschiedlich. In der gemäß der Darstellung in Fig. 13 unteren Nut 61 die Kugelstange 2 stärker nach oben geschwenkt als in der oberen Nut 61. Die untere Position der Nut 61 entspricht daher der Ruhestellung und die obere Position der Betriebsstellung. Dadurch wird erreicht, dass die Kugelstange 2 in der Ruhestellung einen größeren Abstand von dem Boden hat als in der Betriebsstellung. In der Ruhestellung kann die Kugelstange 2 daher weiter nach oben geschwenkt werden als in der Betriebsstellung, so dass die Kugelstange 2 in der Ruhestellung vollständig hinter dem Stoßfänger verschwindet. Insbesondere ist es nicht mehr notwendig, den Stoßfänger wie bisher üblich für die Betriebsstellung der Kugelstange 2 auszuscheiden. Dadurch wird die Montage der Anhängerkupplung erleichtert und eine ansprechende Optik erreicht, weil der Stoßfänger nicht mehr ausgeschnitten werden muss.

Bei der in Fig. 14 dargestellten Variante der Kurvensteuerung 66 wurde gegenüber der zuvor beschriebenen Kurvensteuerung 55 im Wesentlichen das als Bügel ausgebildete Kupplungsglied 63 durch ein als Langloch ausgebildetes Kupplungsglied 67 ersetzt, in welchem der Mitnehmer 65 kipp- und verschiebbar geführt ist. Durch diesen Aufbau wird die im Wesentlichen selbe Kinematik wie bei der Kurvensteuerung 55 erreicht, so dass auf eine weitere Beschreibung verzichtet werden kann.

Mit der Erfindung wird eine Anhängerkupplung 1 mit einem Schwenkantrieb 6 vorgeschlagen, welche einfach und kompakt in einen beliebigen Kraftfahrzeug, insbesondere einem Personenkraftwagen, eingebaut werden kann, wobei die Kurvenführung 7 des Schwenkantriebs 6 derart ausgebildet ist, dass ein mit der Antriebswelle 12 verbundener Dorn 16 des Schwenkkurvenkörpers 8 durch Kontakt mit einer entsprechenden Kurvenfläche 11 des Leitkurvenkörpers 9 in leicht gängiger Weise die Bewegung der Kugelstange 2 vorgibt und eine schnelle und direkte Verstellung der Anhängerkupplung 1 ermöglicht.

### Bezugszeichenliste:

- 1: Anhängerkupplung
- 2: Kugelstange
- 3: freies Ende
- 4: Kupplungskugel
- 5: dem freien Ende entgegengesetztes Ende
- 6: Schwenkantrieb
- 7: Kurvensteuerung
- 8: Schwenkkurvenkörper
- 9: Leitkurvenkörper
- 10: Kurvenfläche
- 11: Kurvenfläche
- 12: Antriebswelle
- 13: Rahmen
- 13a,b,c: Rahmenteile
- 14: schwenkbare Steckdose
- 15: Kippachse
- 16: Dorn
- 17: Schräge
- 18: Anschlag
- 19: Anschlag
- 20: Bolzen
- 21: Bolzen
- 22: Befestigungsbolzen
- 23: Führung
- 24: Drehsperre
- 25: Bügel
- 26: Öffnung
- 27: Ausnehmung
- 28: Verriegelung
- 29: Bolzen
- 30: Bolzen
- 31: Gestänge
- 32: Gelenke
- 33: Pin
- 34: Exzenter
- 35: Führungsnut
- 36: Verriegelung
- 37: Führung
- 38: Vertiefung
- 39: Halter
- 40: Drehachse
- 41: Stift
- 42: Kippgelenk
- 43: Knebel
- 44: Kurvensteuerung
- 45: Exzenter
- 46: Anschlag
- 47: Führung
- 48: Begrenzung
- 49: federbelastete Kugel
- 50: Führungsnut
- 51: Nutführung
- 52: Nutstein
- 53: Stiftschrauben
- 54: Gummipuffer
- 55: Kurvensteuerung
- 56: Kurvenfläche
- 57: Kurvenfläche
- 58: Drehsperre
- 59: Schwenkkurvenkörper
- 60: Leitkurvenkörper
- 61: Führung, Nut
- 62: Dorn
- 63: Kupplungsglied, Bügel
- 64: Ausnehmung
- 65: Mitnehmer
- 66: Kurvensteuerung
- 67: Kupplungsglied, Langloch
- P: Drehrichtung

## Patentansprüche

1. Anhängerkupplung für Fahrzeuge, insbesondere Kraftfahrzeuge wie Personenkraftwagen, mit einer Kugelstange (2), welche an ihrem freien Ende (3) eine Kupplungskugel (4) trägt und an ihrem anderen Ende (5) mit einem Schwenkantrieb (6) zum Verschwenken der Kugelstange (2) zwischen einer Betriebsstellung und einer Ruhestellung fest verbunden ist, wobei der Schwenkantrieb (6) eine Kurvensteuerung (7, 44, 55, 66) mit einem Leitkurvenkörper (9, 60) und einem Schwenkkurvenkörper (8, 59) aufweist, deren Kurvenflächen (10, 11, 56, 57) derart zusammenwirken, dass die Kugelstange (2) mit ihrem freien Ende (3) auf einer vorgegebenen Kurve zwischen ihrer Betriebsstellung und ihrer Ruhestellung verschwenkbar ist, **dadurch gekennzeichnet, dass** die Kurvenfläche (10, 56) des Schwenkkurvenkörpers (8, 59) einen von dem Schwenkkurvenkörper (8, 59) vorstehenden Dorn (16, 62) aufweist und der Schwenkkurvenkörper (8, 59) mit einer nach außen führende Antriebswelle (12) verbunden ist.

2. Anhängerkupplung nach Anspruch 1, **dadurch gekennzeichnet, dass** die Kugelstange (2) mit dem Leitkurvenkörper (9, 60) um eine Kippachse (15) kippbar in einem Kippgelenk (42) gelagert ist, welches drehbar in einem Rahmen (13) des Schwenkantriebs (6) aufgenommen ist.

3. Anhängerkupplung nach Anspruch 1 oder 2, **dadurch gekennzeichnet, dass** in dem Leitkurvenkörper (9) ein Anschlag (18, 19) für den Dorn (16) zur Rotation der Kugelstange (2) ausgebildet ist.

4. Anhängerkupplung nach Anspruch 3, **dadurch gekennzeichnet, dass** jeweils ein Anschlag (18, 19) für jede Rotationsrichtung der Kugelstange (2) vorgesehen ist.

5. Anhängerkupplung nach Anspruch 3 oder 4, **dadurch gekennzeichnet, dass** ein Anschlag (18, 19) zwischen einer Anschlagposition und einer Freigabeposition bewegbar ausgebildet ist.

6. Anhängerkupplung nach einem der vorhergehenden Ansprüche, **dadurch gekennzeichnet, dass** in dem Leitkurvenköper (9) eine Drehsperre (24) vorgesehen ist, welche insbesondere durch den Dorn (16) betätigbar ist.

7. Anhängerkupplung nach Anspruch 1 oder 2, **dadurch gekennzeichnet, dass** die Kurvenfläche (57) des Leitkurvenkörpers (60) ein Kupplungsglied (63, 67) aufweist, welches aufgrund einer Führung (61) an der Kurvenfläche (56) des Schwenkkurvenkörpers (59) zu einem Verschwenken des Leitkurvenkörpers (60) führt.

8. Anhängerkupplung nach Anspruch 7, **dadurch gekennzeichnet, dass** die Kurvenfläche (56) des Schwenkkurvenköpers (59) als Führung eine Nut (61) aufweist.

9. Anhängerkupplung nach Anspruch 7 oder 8, **dadurch gekennzeichnet, dass** an dem Kupplungsglied (63, 67) ein an dem Schwenkkurvenkörper (59) geführter Mitnehmer (63) angreift, welcher an dem Kupplungsglied angelenkt ist.

10. Anhängerkupplung nach einem der Ansprüche 7 bis 9, **dadurch gekennzeichnet, dass** die Führung (61) entlang des dem Leitkurvenkörper (60) zugewandten Rands des Schwenkkurvenkörpers (59) ausgebildet ist.

11. Anhängerkupplung nach einem der Ansprüche 7 bis 10, **dadurch gekennzeichnet, dass** die Führung (61) bereichsweise, insbesondere im Bereich des Dorns (62) des Schwenkkurvenkörpers (59), überlappend ausgebildet ist.

12. Anhängerkupplung nach einem der Ansprüche 7 bis 11, **dadurch gekennzeichnet, dass** das Kupplungsglied als an dem Leitkurvenkörper (60) angelenkter Bügel (63) oder als an dem Leitkurvenkörper (60) vorgesehenes Langloch (67) ausgebildet ist.

13. Anhängerkupplung nach einem der vorhergehenden Ansprüche, **dadurch gekennzeichnet, dass** eine verschwenkbare Steckdose (14) mit dem Schwenkantrieb (6) verbunden ist, welche in Betriebsstellung der Kugelstange (2) in einer sichtbaren und in Ruhestellung der Kugelstange (2) in einer nicht sichtbaren Stellung ist.

14. Anhängerkupplung nach einem der vorhergehenden Ansprüche, **dadurch gekennzeichnet, dass** eine Verriegelung (28) der Kugelstange (2) im Betriebszustand vorgesehen ist, welche insbesondere zwei in dem Rahmen (13) des Schwenkantriebs (6) verschiebbar gelagerte Bolzen (29, 30) aufweist, welche in die Kugelstange (2) einfahrbar sind.

15. Anhängerkupplung nach Anspruch 8, **dadurch gekennzeichnet, dass** die Verriegelung (28) über einen von der Antriebswelle (12) mitbewegten Exzenter (34) über ein Gestänge (31) betätigbar ist.

16. Anhängerkupplung nach einem der vorhergehenden Ansprüche, **dadurch gekennzeichnet, dass** ein Rahmen (13) des Schwenkantriebs (6) zwei getrennte Rahmenteile (13a, 13b) aufweist.

17. Anhängerkupplung nach einem der vorhergehenden Ansprüche, **dadurch gekennzeichnet, dass** die Antriebswelle (12) zum Verfahren der Kugelstange (2) zwischen der Ruheposition und der Betriebsposition um ganzzahlige Vielfache von 180°, insbesondere 360°, verdrehbar ist.

18. Anhängerkupplung nach einem der vorhergehenden Ansprüche, **dadurch gekennzeichnet, dass** zum Feststellen der Betriebsstellung der Anhängerkupplung (1) zwei voneinander unabhängige Sensoren vorgesehen sind.

## Claims

1. A trailer coupling for vehicles, more preferably motor vehicles such as passenger cars, with a ball bar (2) which, at its free end (3) carries a coupling ball (4) and at its other end (5) is firmly connected with a swivel drive (6) for swivelling the ball bar (2) between an operating position and a rest position, wherein the swivel drive (6) has a cam control (7, 44, 55, 66) with a lead cam body (9, 60) and a swivel cam body (8, 59), the cam surfaces (10, 11, 56, 57) of which interact such that the ball bar (2) with its free end (3) can be swivelled on a preset curve between its operating position and its rest position, **characterized in that** the cam surface (10, 56) of the swivel cam body (8, 59) has a tongue (16, 62) which protrudes from the swivel cam body (8, 59) and the swivel cam body (8, 59) is connected with a drive shaft (12) leading to the outside.

2. The trailer coupling according to claim 1, **characterized in that** the ball bar (2) with the lead cam body (9, 60) is mounted around a tilting axis (15) in a tilting joint (42) in a tilting manner which is accommodated in a rotatable manner in a frame (13) of the swivel drive (6).

3. The trailer coupling according to claim 1 or 2, **characterized in that** in the lead cam body (9) a stop (18, 19) for the tongue (16) for rotation of the ball bar (2) is formed.

4. The trailer coupling according to claim 3, **characterized in that** a stop (18, 19) each is provided for each direction of rotation of the ball bar (2).

5. The trailer coupling according to claim 3 or 4, **characterized in that** a stop (18, 19) is moveably formed between a stop position and a release position.

6. The trailer coupling according to any one of the preceding claims, **characterized in that** a rotation lock (24) is provided in the lead cam body (9) which more preferably can be actuated by the tongue (16).

7. The trailer coupling according to claim 1 or 2, **characterized in that** the cam surface (57) of the lead cam body (60) has a coupling member (63, 67) which, because of a guide (61) on the cam surface (56) of the swivel cam body (59), results in a swivelling of the lead cam body (60).

8. The trailer coupling according to claim 7, **characterized in that** the cam surface (56) of the swivel cam body (59) has a slot (61) as guide.

9. The trailer coupling according to claim 7 or 8, **characterized in that** a driver (63) articulated on the coupling member which is guided on the swivel cam body (59) acts on the coupling member (63, 67).

10. The trailer coupling according to any one of the claims 7 to 9, **characterized in that** the guide (61) is formed along the edge of the swivel cam body (59) facing the lead cam body (60).

11. The trailer coupling according to any one of the claims 7 to 10, **characterized in that** the guide (61) by areas, more preferably in the area of the tongue (62) of the swivel cam body (59) is formed in an overlapping way.

12. The trailer coupling according to any one of the claims 7 to 11, **characterized in that** the coupling member is formed as an arm (63) articulated on the lead cam body (60) or as elongated hole (67) provided on the lead cam body (60).

13. The trailer coupling according to any one of the preceding claims, **characterized in that** a socket (14) that can be swivelled is connected with the swivel drive (6) which in operating position of the ball bar (2) is in a visible and in the rest position of the ball bar (2) in a non-visible position.

14. The trailer coupling according to any one of the preceding claims, **characterized in that** a latch (28) of the ball bar (2) in the operating state is provided which more preferably has two bolts (29, 30) which are displaceably mounted in the frame (13) of the swivel drive (6), which can be retracted in the ball bar (2).

15. The trailer coupling according to claim 8, **characterized in that** the latch (28) can be actuated via a cam (34) also driven by the drive shaft (12) via a linkage (31).

16. The trailer coupling according to any one of the preceding claims, **characterized in that** a frame (13) of the swivel drive (6) has two separate frame parts (13a, 13b).

17. The trailer coupling according to any one of the preceding claims, **characterized in that** the drive shaft (12) for moving the ball bar (2) between the rest position and the operating position can be rotated by whole number multiples of 180°, more preferably 360°.

18. The trailer coupling according to any one of the preceding claims, **characterized in that** for detecting the operating position of the trailer coupling (1) two sensors independent of each other are provided.

## Revendications

1. Attelage de remorque pour véhicules, en particulier véhicules automobiles tels que voitures de tourisme, comprenant une tige à boule (2), qui porte une boule d'attelage (4) sur son extrémité (3) libre et est reliée sur son autre extrémité (5) à une commande de pivotement (6) pour le pivotement de la tige à boule (2) entre une position de service et une position de repos, la commande de pivotement (6) présentant une commande de came (7, 44, 55, 66) avec un corps à courbe de guidage (9, 60) et un corps à courbe de pivotement (8, 59), dont les surfaces de courbe (10, 11, 56, 57) coopèrent de telle sorte que la tige à boule (2) peut basculer par son extrémité (3) libre sur une courbe prédéfinie entre sa position de service et sa position de repos, **caractérisé en ce que** la surface de courbe (10, 56) du corps à courbe de pivotement (8, 59) présente un mandrin (16, 62) dépassant du corps à courbe de pivotement (8, 59) et le corps à courbe de pivotement (8, 59) est relié à un arbre d'entraînement (12) allant vers l'extérieur.

2. Attelage de remorque selon la revendication 1, **caractérisé en ce que** la tige à boule (2) avec le corps à courbe de guidage (9, 60) est logée dans une articulation de basculement (42) de façon à pouvoir basculer autour d'un axe de basculement (15), laquelle articulation est logée de façon rotative dans un cadre (13) de la commande de pivotement (6).

3. Attelage de remorque selon la revendication 1 ou 2, **caractérisé en ce qu'**une butée (18, 19) pour le mandrin (16) pour la rotation de la tige à boule (2) est réalisée dans le corps à courbe de guidage (9).

4. Attelage de remorque selon la revendication 3, **caractérisé en ce que** respectivement une butée (18, 19) est prévue pour chaque sens de rotation de la tige à boule (2).

5. Attelage de remorque selon la revendication 3 ou 4, **caractérisé en ce qu'**une butée (18, 19) est réalisée de façon mobile entre une position de butée et une position de libération.

6. Attelage de remorque selon l'une quelconque des revendications précédentes, **caractérisé en ce qu'**un blocage de rotation (24), qui peut être actionné en particulier par le mandrin (16) est prévu dans le corps à courbe de guidage (9).

7. Attelage de remorque selon la revendication 1 ou 2, **caractérisé en ce que** la surface de courbe (57) du corps à courbe de guidage (60) présente un élément d'accouplement (63, 67), qui entraîne, du fait d'un guidage (61) sur la surface de courbe (56) du corps à courbe de pivotement (59), un pivotement du corps à courbe de guidage (60).

8. Attelage de remorque selon la revendication 7, **caractérisé en ce que** la surface de courbe (56) du corps à courbe de pivotement (59) présente une rainure (61) comme guide.

9. Attelage de remorque selon la revendication 7 ou 8, **caractérisé en ce qu'**un entraîneur (63) guidé sur le corps de pivotement (59), qui est articulé sur l'élément d'accouplement, s'applique sur l'élément d'accouplement (63, 67).

10. Attelage de remorque selon l'une quelconque des revendications 7 à 9, **caractérisé en ce que** le guide (61) est réalisé le long du bord, tourné vers le corps à courbe de guidage (60), du corps à courbe de pivotement (59).

11. Attelage de remorque selon l'une quelconque des revendications 7 à 10, **caractérisé en ce que** le guide (61) est réalisé avec chevauchement par zones, en particulier dans la zone du mandrin (62) du corps à courbe de pivotement (59).

12. Attelage de remorque selon l'une quelconque des revendications 7 à 11, **caractérisé en ce que** l'élément d'accouplement est réalisé sous la forme d'étrier (63) articulé sur le corps à courbe de guidage (60) ou sous forme de trou oblong (67) prévu sur le corps à courbe de guidage (60).

13. Attelage de remorque selon l'une quelconque des revendications précédentes, **caractérisé en ce qu'**une prise (14) basculante est reliée à la commande de pivotement (6), qui est dans une position visible dans la position de service de la tige à boule (2) et dans une position non visible dans la position de repos de la tige à boule (2).

14. Attelage de remorque selon l'une quelconque des revendications précédentes, **caractérisé en ce qu'**un verrouillage (28) de la tige à boule (2) est prévu dans l'état de service, qui présente en particulier deux boulons (29, 30) logés de façon coulissante dans le cadre (13) de la commande de pivotement (6), lesquels boulons peuvent être engagés dans la tige à boule (2).

15. Attelage de remorque selon la revendication 8, **caractérisé en ce que** le verrouillage (28) peut être actionné au moyen d'un excentrique (34) entraîné également par l'arbre d'entraînement (12) au moyen d'une tringle (31).

16. Attelage de remorque selon l'une quelconque des revendications précédentes, **caractérisé en ce qu'**un cadre (13) de la commande de pivotement (6) présente deux parties de cadre (13a, 13b) séparées.

17. Attelage de remorque selon l'une quelconque des revendications précédentes, **caractérisé en ce que** l'arbre d'entraînement (12) destiné au déplacement de la tige à boule (2) peut tourner entre la position de repos et la position de service de multiples entiers de 180°, en particulier de 360°.

18. Attelage de remorque selon l'une quelconque des revendications précédentes, **caractérisé en ce que** deux capteurs indépendants l'un de l'autre sont prévus pour la détermination de la position de service de l'attelage de remorque (1).
